# EUROPÄISCHE PATENTSCHRIFT

(11) **EP 1 069 338 B1**
(45) Veröffentlichungstag und Bekanntmachung des Hinweises auf die Patenterteilung: **18.08.2004**
(21) Anmeldenummer: 00114464.1
(22) Anmeldetag: 06.07.2000
(51) Int. Cl.: F16F 13/10

(54) **Hydraulisch dämpfendes Lager**
Hydraulically dampened support
Support à amortissement hydraulique

(30) Priorität: 13.07.1999 DE 19932582
(43) Veröffentlichungstag der Anmeldung: 17.01.2001
(73) Patentinhaber: Carl Freudenberg KG, 69469 Weinheim (DE)
(72) Erfinder: Hamaekers, Arno, 69517 Gorxheimertal (DE); Simuttis, Arnold, Dr., 55545 Bad Kreuznach (DE); Rudolf, Hans-Joachim, 26935 Stadland (DE)

(56) Entgegenhaltungen:
- EP-A- 0 354 381
- DE-A- 3 937 232
- DE-C- 3 225 700

## Beschreibung

### Technisches Gebiet

Die Erfindung betrifft ein hydraulisch dämpfendes Lager nach dem Oberbegriff von Anspruch 1.

### Stand der Technik

Aus der DE 39 37 232 A1 ist ein hydraulisch dämpfenden Lager bekannt, bei dem zur Isolierung motorerregter höherfrequenter Schwingungen zwischen dem Arbeitsraum und dem Ausgleichsraum eine elastische Trennwand vorgesehen ist. Die Offenfläche der Trennwand, dies ist die dem Arbeitsraum zugewandte Fläche der Trennwand, welche mit Dämpfungsflüssigkeit beaufschlagt ist, ist erheblich kleiner als der Förderquerschnitt des Federelements. Eine Relativbewegung von erstem und zweitem Verankerungsteil würde das Volumen des Arbeitsraums verändern, in dem die durch das Federelement und das erste Verankerungsteil gebildete Begrenzung des Arbeitsraums zur Trennwand hin oder von dieser weg verschoben wird. Als Förderquerschnitt des Federelements wird dabei die Fläche eines Ersatzkolbens bezeichnet, der bei der Verschiebung des Kolbens das gleiche Volumen verdrängen würde, wie das Federelement und das erste Verankerungsteil. Bei dem aus der DE 39 37 232 A1 bekannten Lager ist die Offenfläche der Trennwand erheblich kleiner als der Förderquerschnitt. Der Bauraum für die elastische Trennwand ist dabei dadurch begrenzt, daß in dem Stützkörper der Dämpfungskanal ausgebildet ist, welcher sich in radialer Richtung um die Trennwand erstreckt. Nachteil des aus der DE 39 37 232 A1 bekannten Lagers ist, daß der Verlauf der dynamischen Federrate insbesondere im Hochfrequenzbereich zwischen 150 und 600 Hz noch nicht optimal ist.

Aus der DE 42 05 229 ist ein hydraulisch dämpfendes Gummilager mit einem ersten und einem zweiten Verankerungsteil, die beweglich zueinander angeordnet sind, mit einem zwischen dem ersten und dem zweiten Verankerungsteil wirkenden Federelement, mit einem mit Dämpfungsflüssigkeit gefüllten Arbeitsraum und einem von diesem getrennten über einen von einer Kanalwandung begrenzten Kanal flüssigkeitsleitend mit dem Arbeitsraum verbundenen Ausgleichsraum, wobei das Volumen des Arbeitsraums bei einer Relativbewegung von erstem und zweitem Verankerungsteil verändert wird, so daß Dämpfungsflüssigkeit in dem Kanal zwischen Ausgleichsraum und Arbeitsraum bewegt wird, und wobei der Arbeitsraum und der Ausgleichsraum durch eine mit Dämpfungsflüssigkeit beaufschlagte Trennwand getrennt sind, die durch einen Stützkörper gebildet wird, bekannt. Der Arbeitsraum und Ausgleichsraum verbindende Kanal ist in einem Außenbereich des einstückigen Stützkörpers ausgebildet und einerseits durch den Stützkörper und andererseits durch einen radial außenliegenden Gehäuseabschnitt begrenzt.

Darüberhinaus ist aus der EP 0 354 381 A2 ein hydraulisch dämpfendes Motorlager bekannt, welches die Merkmale des Oberbegriffs von Anspruch 1 zeigt. Bei dem vorbekannten Lager ist zwischen den beiden mit Flüssigkeit gefüllten Kammern eine Zwischenplatte vorgesehen, welche aus zwei tassenförmigen, mit ihren Bodenflächen gegeneinanderliegenden Blechteilen besteht, welche einen nach außen gewölbten Rand aufweisen. Über diese Randabschnitte werden die beiden Blechteile in einer entsprechenden Ausnehmung des Gehäuses gehalten.

### Darstellung der Erfindung

Der Erfindung liegt die Aufgabe zugrunde, ein hydraulisch dämpfendes Lager anzugeben, welches einen besonders günstigen Verlauf der dynamischen Federrate, insbesondere im Hochfrequenzbereich zwischen 150 und 600 Hz aufweist.

Diese Aufgabe wird durch ein hydraulisch dämpfendes Lager mit den Merkmalen von Anspruch 1 gelöst.

Durch die vorliegende Erfindung wird angegeben, wie auch bei einer zweiteiligen Ausgestaltung des Stützkörpers eine Vergrößerung der Offenfläche der elastischen Trennwand erreicht werden kann. Indem der an dem zweiten Verankerungsteil ausgebildete Gehäuseabschnitt einen radial äußeren Abschnitt der Kanalwandung bildet, kann der Kanal in radialer Richtung weiter außen angeordnet werden. Dadurch ist es möglich, die Offenfläche der Trennwand zu vergrößern, ohne die Kanallänge zu verkleinern. Eine große Kanallänge ist von entscheidender Bedeutung für eine wirksame Schwingungsisolierung von niederfrequenten Schwingungen.

Dabei ist vorgesehen, dass der Trennkörper in axialer Lagerrichtung mittels eines an dem zweiten Verankerungsteil ausgebildeten Sitzes und in radialer Richtung des Gehäuseabschnitts, der den Trennkörper zumindest teilweise umschließt, festgelegt ist.

Zudem ist der Gehäuseabschnitt im Bereich der Anlage des Trennkörpers wenigstens abschnittsweise derart konisch ausgebildet, daß der Trennkörper gegen den Sitz gedrückt wird. Hierdurch wird auf einfache Weise der Trennkörper an dem zweiten Verankerungsteil festgelegt.

Gemäß einer besonders vorteilhaften Ausgestaltung der Erfindung ist vorgesehen, der erste, an dem Gehäuseabschnitt anliegende Trennkörperteil durch den konischen Gehäuseabschnitt gegen den zweiten, dem Sitz zugewandten Trennkörperteil verspannt ist. Durch diese Gestaltung kann eine besonders große Offenfläche der Trennwand erzielt werden, da der sowohl durch das erste als auch durch das zweite Trennkörperelement begrenzte Kanal in radialer Richtung besonders weit nach außen gelegt werden kann, wodurch im Bauraum für die elastische Trennwand gewonnen wird.

Gemäß einer Weiterbildung dieses Erfindungsgedankens ist vorgesehen, daß in dem Bereich der Anlage des ersten Trennkörperteils an dem Gehäuseabschnitt eine elastisch dichtende Beschichtung vorgesehen ist. Diese ermöglicht es nicht nur, die beiden Trennkörperelemente unter einer elastischen Kraft gegeneinander zu verspannen, sondern gleichzeitig dem Kanal gegenüber dem Arbeitsraum zuverlässig abzudichten.

Die Herstellungskosten werden dadurch gesenkt, daß das Federelement aus Gummi besteht und elastisch dichtende Beschichtung einstückig mit dem Federelement ausgebildet ist.

Eine hohe Stabilität des Lagers wird dadurch erzielt, daß das zweite Trennkörperelement durch einen Verbindungsabschnitt des zweiten Verankerungsteils formschlüssig an dem Sitz festgelegt ist.

Vorteilhafterweise ist zwischen den beiden Trennkörperteilen die Trennwand eingespannt.

Zur Verhinderung von übermäßigen Bewegungen der Trennwand ist vorgesehen, daß wenigstens auf einer Seite der elastisch ausgebildeten Trennwand eine die Trennwand stützende Lochscheibe angeordnet ist.

Eine weitere Vergrößerung der Offenfläche der Trennwand kann dadurch erreicht werden, daß die Trennwand in einer Ausnehmung des Trennkörpers angeordnet und mittels in die Ausnehmung vorstehender Halteabschnitte des Trennkörpers gehalten ist. Da die Halteabschnitte nur bereichsweise in die Ausnehmung vorspringen, kann die Fläche der Trennwand, die mit der Dämpfungsflüssigkeit in Kontakt ist, vergrößert werden.

Gemäß einer vorteilhaften Ausgestaltung ist vorgesehen, daß sich der Kanal in radialer Richtung im wesentlichen konzentrisch zu dem Gehäuseabschnitt erstreckt.

Weiterhin kann vorgesehen sein, daß der Ausgleichsraum durch ein insbesondere als elastischer Rollbalg ausgebildetes verformbares Element begrenzt ist, welches zwischen dem Sitz und dem Trennkörper eingespannt ist. Indem die Einspannung dergestalt erfolgt, daß der Trennkörper unmittelbar im Sitz anliegt, wird die Herstellung vereinfacht, da die Dicke des verformbaren Elements eine Einspannstelle keinen Einfluß auf den Zusammenhalt der einzelnen Elemente des zweiten Verankerungsteils hat.

Eine besonders platzsparende Konstruktion wird dadurch erzielt, daß der radial äußere Abschnitt der Kanalwandung, ein äußerer Bereich des Trennkörpers und ein äußerer Bereich des Rollbalgs in axialer Lagerrichtung nebeneinander angeordnet sind.

### Kurzbeschreibung der Zeichnung

Ein Ausführungsbeispiel der Erfindung wird nachfolgend anhand der Zeichnung weiter verdeutlicht.

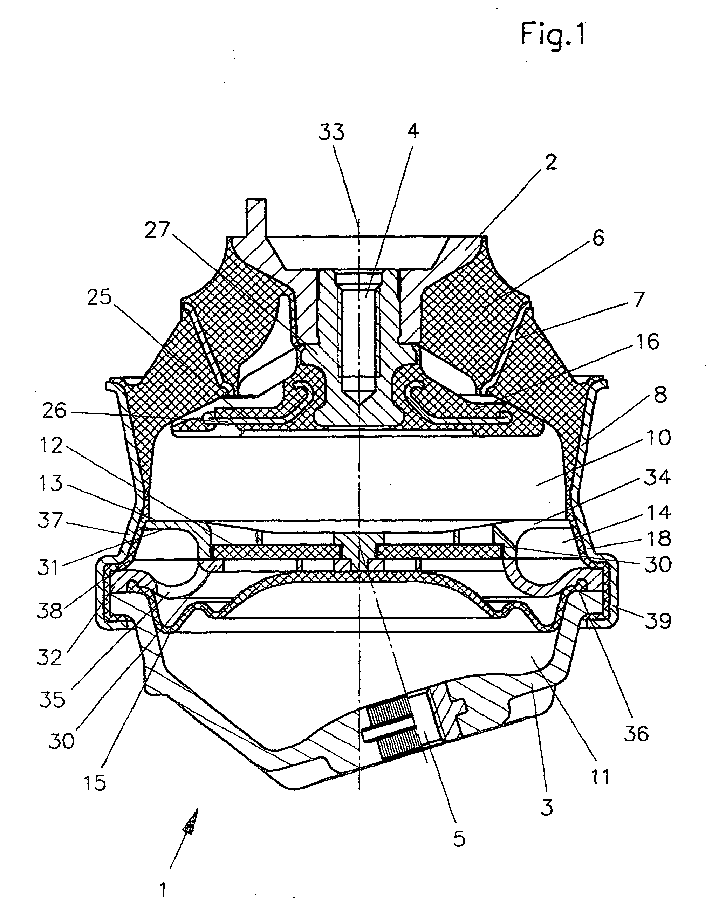

Fig. 1 zeigt einen Querschnitt durch ein erfindungsgemäßes hydraulisch dämpfendes Lager.

### Ausführung der Erfindung

In Fig. 1 ist ein hydraulisch dämpfendes Lager 1 mit einem ersten Verankerungsteil 2 und einem relativ zu dem ersten Verankerungsteil 2 beweglichen zweiten Verankerungsteil 3 dargestellt. Über die aus Metall bestehenden ersten und zweiten Verankerungsteile 2, 3 kann das Lager z.B. einerseits mit dem Motor und andererseits mit dem Chassis (nicht dargestellt) verbunden werden, wobei eine Befestigung über die Bohrungen 4 und 5 erfolgt.

Zwischen dem ersten und zweiten Verankerungsteil 2, 3 ist ein Federelement 6 vorgesehen, welches als Gummikörper ausgebildet ist. Der ringförmige Gummikörper hat im wesentlichen die Form eines Kegelstumpfs, wobei das in radialer Richtung äußere Ende mit dem zweiten Verankerungsteil 3 und das in radialer Richtung innere Ende mit dem ersten Verankerungsteil 2 verbunden ist. Dabei kann das Federelement 6 durch Vulkanisieren mit dem ersten und dem zweiten Verankerungsteil 2, 3 verbunden sein. In dem das Federelement 6 bildenden Gummikörper ist ein Stützring 7 aufgenommen, der den Gummikörper in einen radial inneren, und einen radial äußeren Abschnitt unterteilt.

Das zweite Verankerungsteil 3 weist einen Gehäuseabschnitt 8 auf, der die Lagerachse 9 ringförmig umschließt. An dem dem ersten Verankerungsteil zugewandten Ende des Gehäuseabschnitts 8 ist das Federelement 6 festgelegt.

In dem durch den Gehäuseabschnitt 8 umgrenzten Raum ist ein Arbeitsraum 10 und ein Ausgleichsraum 11 ausgebildet. Der Arbeitsraum 10 ist von dem Ausgleichsraum 11 durch eine Trennwand 12, welche an einen Trennkörper 13 gelagert ist, getrennt. Dabei sind der Arbeitsraum 10 und der Ausgleichsraum 11 mit Dämpfungsflüssigkeit gefüllt und über einen Dämpfungskanal 14 flüssigkeitsleitend miteinander verbunden.

Der Arbeitsraum 10 wird durch das ersten Verankerungsteil 2, das Federelement 6, den Gehäuseabschnitt 8, die Trennwand 12 und den Trennkörper 13 begrenzt. Der Ausgleichsraum 11 wird durch die dem Arbeitsraum 10 abgewandte Seite der Trennwand 12 und des Trennkörpers 13 sowie durch eine als Rollbalg ausgebildete elastische Membran 15 begrenzt.

Bei einer Relativbewegung zwischen dem ersten Verankerungsteil 2 und zweiten Verankerungsteil 3 wird das Volumen des mit Dämpfungsflüssigkeit vollständig gefüllten Arbeitsraums 10 verändert, so daß Dämpfungsflüssigkeit durch den Dämpfungskanal 14 zwischen dem Arbeitsraum 10 und dem Ausgleichsraum 11 bewegt wird. Die elastische Membran 15 ermöglicht es, daß in dem Ausgleichsraum 11 ein veränderliches Volumen der Dämpfungsflüssigkeit aufgenommen wird. Bei Einleitung von Schwingungen in das Lager 1, wird eine Schwingungsreduzierung dadurch erzielt, daß die in dem Dämpfungskanal 14 aufgenommene Dämpfungsflüssigkeit gleichfalls in Schwingungen versetzt wird, wenn die Eigenfrequenz der Dämpfungsflüssigkeit in dem Dämpfungskanal 14 angeregt wird. Hierbei ist es von Vorteil, wenn die Masse der in dem Flüssigkeitskanal 14 bewegten Dämpfungsflüssigkeit möglichst groß ist. Dies kann durch einen besonders langen Dämpfungskanal 14 erreicht werden.

Die den Arbeitsraum 10 von dem Ausgleichsraum 11 trennende Trennwand 12 ist als elastische Membran ausgebildet. Sie ist beidseitig mit Dämpfungsflüssigkeit beaufschlagt.

Der Trennkörper 13 ist zweiteilig ausgebildet und weist ein erstes Trennkörperelement 31 und ein zweites Trennkörperelement 32 auf. Die Trennwandelemente 31, 32 sind in Richtung der Lagerachse 33 benachbart aneinander anliegend angeordnet.

Zwischen den Trennkörperelementen 31, 32 ist die als elastische Membran ausgebildete Trennwand 12 eingespannt. Sie wird dabei durch die an dem ersten und zweiten Trennkörperelement 31, 32 ausgebildeten Halteelemente 30 im wesentlichen senkrecht zur Lagerachse 33 gehalten. Dabei sind die Halteabschnitte 30 derart ausgebildet, daß die elastische Trennwand 12 mit einem möglichst großen Anteil ihrer Gesamtfläche mit der Dämpfungsflüssigkeit in Verbindung steht. Dadurch wird eine große Offenfläche, dies ist die dem Arbeitsraum 10 zugewandte Fläche der Trennwand 12, welche von den Halteabschnitten 30 freigelassen wird und mit Dämpfungsflüssigkeit beaufschlagt ist, der Trennwand 12 erzielt.

Eine weitere Vergrößerung der Offenfläche der Trennwand 12 wird durch die platzsparende Gestaltung der Trennkörperelemente 31, 32 in deren äußeren Bereich erzielt, wie nachfolgend beschrieben. Auf diese Weise kann bei gleichbleibender Länge des Dämpfungskanals 14 zwischen den Trennkörperelementen 31, 32 eine eine größere Fläche aufweisende Trennwand 12 angeordnet werden.

Der radiale äußere Radialbereich der Trennkörperelemente 31, 32 ist so ausgebildet, daß eine sich im wesentlichen in radialer Richtung erstreckender Dämpfungskanal 14 gebildet wird. Dabei steht der Dämpfungskanal 14 über eine in einem ersten Abschnitt des Dämpfungskanals 14 ausgebildeten Öffnung 34 mit dem Arbeitsraum 10 und eine in einem zweiten Abschnitt des Dämpfungskanals 14 ausgebildete zweite Öffnung 35 mit dem Ausgleichsraum 11 in Verbindung. Die Kanalwandung des Dämpfungskanals 14 wird in einem ersten radial inneren Abschnitt durch die Trennkörperelemente 31, 32 und in einem zweiten radial äußeren Abschnitt durch einen an dem zweiten Verankerungsteil 3 ausgebildeten Gehäuseabschnitt 8 gebildet. Der durch die Trennkörperelemente 31, 32 gebildete Abschnitt der Kanalwandung weist also in etwa die Form eines nach radial außen geöffneten U auf, wobei der so entstandene Öffnungsbereich durch den Gehäuseabschnitt 8 verschlossen wird.

Der durch die Trennkörperelemente 31, 32 gebildete Trennkörper 26 ist in Richtung der Lagerachse 33 mittels eines an dem zweiten Verankerungsteil 3 ausgebildeten Sitzes 36 festgelegt. In radialer Lagerichtung wird der Trennkörper 26 durch den Gehäuseabschnitt 8 in einer definierten Position gehalten.

Dabei ist der Gehäuseabschnitt 8 im Bereich der Anlage des näher dem ersten Verankerungsteil 2 zugeordneten Trennkörperelements 31 derart konisch ausgebildet, daß das Trennkörperelement 31 durch den konischen Gehäuseabschnitt 37 gegen das zweite, dem Sitz 36 nähere Trennkörperelement 32 verspannt ist. Dabei ist im Bereich der Anlage des ersten Trennkörperelements 31 an dem Gehäuseabschnitt 8 eine elastisch dichtende Beschichtung 38 vorgesehen, welche zum einen den Dämpfungskanal 14 an den Berührungspunkten zwischen Trennkörperelement 31 und Gehäuseabschnitt 8 abdichtet und zum anderen für einen Toleranzausgleich sorgt. Die elastische Beschichtung 38 ist dabei einstückig mit dem aus Gummi bestehenden Federelement 6 hergestellt.

Das zweite Trennkörperelement 32 ist durch einen Verbindungsabschnitt 39 des zweiten Verankerungsteils 3 formschlüssig an dem Sitz 36 festgelegt. Zwischen dem zweiten Trennkörperelement 32 und dem Sitz 36 ist dabei ein radialer äußerer, verdickter Bereich des Rollbalgs 15 dichtend eingespannt.

An dem ersten Verankerungsteil 2 ist ein sich in dem Arbeitsraum 10 erstrekkender Verdränger 16 in der Dämpfungsflüssigkeit angeordnet. Der Verdränger 16 ist zusammen mit dem Verankerungsteil 2 relativ zu dem zweiten Verankerungsteil 3 bewegbar.

Der Verdränger 16 besteht im wesentlichen aus Elastomer 25 und weist einen in diesen eingebetteten Stützkörper 26 aus Metall auf. Der Verdränger 16 ist über einen Zapfen 27 an dem ersten Verankerungsteil 2 befestigt.

Der Verdränger 16 ist zudem als Anschlag ausgebildet, welcher die Bewegung zwischen erstem und zweitem Verankerungsteil 2, 3 begrenzt. Bei vollständig eingefedertem Lager 1 liegt er an dem Stützkörper 13 an.

## Patentansprüche

1. Hydraulisch dämpfendes Lager mit einem ersten Verankerungsteil (2) und einem zweiten Verankerungsteil (3), die beweglich zueinander angeordnet sind, mit seinem zwischen dem ersten und dem zweiten Verankerungsteil (2, 3) wirkenden Federelement (6), mit einem mit Dämpfungsflüssigkeit gefüllten Arbeitsraum (10) und einem von diesem getrennten und über einen von einer Kanalwandung begrenzten Kanal (14) flüssigkeitsleitend mit dem Arbeitsraum (10) verbundenen Ausgleichsraum (11), wobei das Volumen des Arbeitsraums (10) bei einer Relativbewegung von ersten und zweitem Verankerungsteil (2, 3) verändert wird, so daß Dämpfungsflüssigkeit in dem Kanal (14) zwischen Ausgleichsraum (11) und Arbeitsraum (10) bewegt wird, wobei der Arbeitsraum (10) und der Ausgleichsraum ( 11) durch eine mit Dämpfungsflüssigkeit beaufschlagte Trennwand (12) getrennt sind, die über einen Trennkörper (13) an dem zweiten Verankerungsteil (3) festgelegt ist, wobei der Trennkörper (13) wenigstens ein erstes und ein zweites in axialer Lagerrichtung benachbartes Trennkörperelement (31, 32) aufweist, wobei die Trennkörperelemente (31, 32) gegeneinander verspannt sind und einen ersten, radial inneren Abschnitt der Kanalwandung bilden, wobei ein an dem zweiten Verankerungsteil (3) ausgebildeter Gehäuseabschnitt (8) einen zweiten, radial äußeren Abschnitt (18) der Kanalwandung bildet, und wobei der Trennkörper (13) in axialer Lagerrichtung mittels eines an dem zweiten Verankerungsteil (3) ausgebildeten Sitzes (36) und in radialer Lagerrichtung mittels des Gehäuseabschnitts (8), der den Trennkörper (13) zumindest teilweise umschließt, festgelegt ist, **dadurch gekennzeichnet, dass** der Gehäuseabschnitt (8) in dem Bereich der Anlage des Trennkörpers (13) wenigstens abschnittweise derart konisch ausgebildet ist, daß der Trennkörper (13) gegen den Sitz (36) gedrückt wird.

2. Lager nach Anspruch1, **dadurch gekennzeichnet, daß** das erste, an dem Gehäuseabschnitt (8) anliegende Trennkörperelement (31) durch den konischen Gehäuseabschnitt (8) gegen das zweite, dem Sitz (36) zugewandte Trennkörperelement (32) verspannt ist.

3. Lager nach Anspruch 2, **dadurch gekennzeichnet, daß** in dem Bereich der Anlage des ersten Trennkörperelements (31) an dem Gehäuseabschnitt (8) eine elastisch dichtende Beschichtung vorgesehen ist.

4. Lager nach Anspruch 3, **dadurch gekennzeichnet, daß** das Federelement (6) aus Gummi besteht und die elastisch dichtende Beschichtung einstückig mit dem Federelement (6) ausgebildet ist.

5. Lager nach einem der Ansprüche 1 bis 4, **dadurch gekennzeichnet, daß** das zweite Trennkörperelement (32) durch einen Verbindungsabschnitt des zweiten Verankerungsteils (3) formschlüssig an dem Sitz (36) festgelegt ist.

6. Lager nach einem der Ansprüche 1 bis 5, **dadurch gekennzeichnet, daß** zwischen den beiden Trennkörperelementen (31, 32) die Trennwand (12) eingespannt ist.

7. Lager nach Anspruch 6, **dadurch gekennzeichnet, daß** wenigstens auf einer Seite der elastisch ausgebildeten Trennwand (12) eine die Trennwand (12) stützende Lochscheibe angeordnet ist.

8. Lager nach Anspruch 6 oder 7, **dadurch gekennzeichnet, daß** die Trennwand (12) in einer Ausnehmung des Trennkörpers (13) angeordnet und mittels in die Ausnehmung vorstehender Halteabschnitte des Trennkörpers gehalten ist.

9. Lager nach einem der Ansprüche 1 bis 8, **dadurch gekennzeichnet, daß** der Kanal in radialer Richtung im wesentlichen konzentrisch zu dem Gehäuseabschnitt (8) verläuft.

10. Lager nach einem der Ansprüche 1 bis 8, **dadurch gekennzeichnet, daß** der Ausgleichsraum (11) durch ein insbesondere als elastischer Rollbalg (15) ausgebildetes verformbares Element begrenzt ist, welches zwischen dem Sitz (36) und dem Trennkörper (13) eingespannt ist.

11. Lager nach einem der Ansprüche 1 bis 10, **dadurch gekennzeichnet, daß** der radial äußere Abschnitt (18) der Kanalwandung, ein äußerer Bereich des Trennkörpers (13) und ein äußerer Bereich des Rollbalgs (15) in axialer Lagerrichtung nebeneinander angeordnet sind.

## Claims

1. A hydraulically damping mount having a first anchoring part (2) and a second anchoring part (3) which are arranged so as to be movable relative to one another, having a spring element (6) acting between the first and the second anchoring part (2, 3), having a working space (10) filled with damping fluid and a compensating space (11) which is separated from the working space (10) and is connected to the latter in a fluid-conducting manner via a passage (14) defined by a passage wall, the volume of the working space (10) being varied during a relative movement of the first and second anchoring parts (2, 3), so that damping fluid is moved in the passage (14) between compensating space (11) and working space (10), the working space (10) and the compensating space (11) being separated by a separating wall (12) which is acted upon by damping fluid and is secured to the second anchoring part (3) via a separating body (13), the separating body (13) having at least a first and a second separating-body element (31, 32) which are adjacent in the axial mount direction, the separating-body elements (31, 32) being restrained against one another and forming a first, radially inner section of the passage wall, a housing section (8) formed on the second anchoring part (3) forming a second, radially outer section (18) of the passage wall, and the separating body (13) being secured in the axial mount direction by means of a seat (36) formed on the second anchoring part (3) and in the radial mount direction by means of the housing section (8), which at least partly encloses the separating body (13), **characterized in that** at least part of the housing section (8), in the region in which the separating body (13) bears against it, is designed to be conical in such a way that the separating body (13) is pressed against the seat (36).

2. A mount according to claim 1, **characterized in that** the first separating-body element (31) bearing against the housing section (8) is restrained by the conical housing section (8) against the second separating-body element (32) facing the seat (36).

3. A mount according to claim 2, **characterized in that** an elastically sealing coating is provided in the region in which the first separating-body element (31) bears against the housing section (8).

4. A mount according to claim 3, **characterized in that** the spring element (6) is made of rubber and the elastically sealing coating is formed in one piece with the spring element (6).

5. A mount according to any one of claims 1 to 4, **characterized in that** the second separating-body element (32) is secured to the seat (36) in a positive-locking manner by a connecting section of the second anchoring part (3).

6. A mount according to any one of claims 1 to 5, **characterized in that** the separating wall (12) is clamped in place between the two separating-body elements (31, 32).

7. A mount according to claim 6, **characterized in that** a perforated disc supporting the separating wall (12) is arranged at least on one side of the separating wall (12) of elastic design.

8. A mount according to claim 6 or 7, **characterized in that** the separating wall (12) is arranged in a recess of the separating body (13) and is held by means of holding sections of the separating body which project into the recess.

9. A mount according to any one of claims 1 to 8, **characterized in that** the passage runs in the radial direction essentially concentrically to the housing section (8).

10. A mount according to any one of claims 1 to 8, **characterized in that** the compensating space (11) is defined by a deformable element which is designed in particular as an elastic rolling bellows (15) and which is clamped in place between the seat (36) and the separating body (13).

11. A mount according to any one of claims 1 to 10, **characterized in that** the radially outer section (18) of the passage wall, an outer region of the separating body (13) and an outer region of the rolling bellows (15) are arranged next to one another in the axial mount direction.

## Revendications

1. Support à amortissement hydraulique, comprenant un premier élément d'ancrage (2) et un second élément d'ancrage (3) disposés de manière mobile l'un par rapport à l'autre, avec son élément résiliant (6) agissant entre le premier et le second éléments d'ancrage (2, 3), comprenant un espace de travail (10) rempli d'un liquide d'amortissement et un espace de compensation (11) séparé de l'espace de travail (10) et relié à ce dernier d'une manière permettant la circulation de liquides par le biais d'un canal (14) limité par une paroi de canal, le volume de l'espace de travail (10) étant modifié lors d'un mouvement relatif du premier et du second éléments d'ancrage (2, 3), de manière à ce que le liquide d'amortissement soit déplacé dans le canal (14) entre l'espace de compensation (11) et l'espace de travail (10), l'espace de travail (10) et l'espace de compensation (11) étant séparés par une cloison (12) soumise à l'action du liquide d'amortissement qui est fixée sur le second élément d'ancrage (3) par le biais d'un corps de séparation (13), le corps de séparation (13) comprenant au moins un premier et un second éléments de corps de séparation (31, 32) voisins dans la direction axiale du support, les éléments de corps de séparation (31, 32) étant en contrainte l'un contre l'autre et formant un premier segment, intérieur dans le sens radial, de la paroi de canal, un segment de logement (8) exécuté sur le second élément d'ancrage (3) formant un second segment (18), extérieur dans le sens radial, de la paroi de canal, et le corps de séparation (13) étant fixé, dans la direction axiale du support, au moyen d'un siège (36) exécuté sur le second élément d'ancrage (3) et, dans la direction radiale du support, au moyen du segment de logement (8) qui entoure le corps de séparation (13) au moins partiellement, **caractérisé en ce que** le segment de logement (8) est exécuté de manière conique, au moins par section, dans la zone de contact du corps de séparation (13), de manière à ce que le corps de séparation (13) soit pressé contre le siège (36).

2. Support selon la revendication 1, **caractérisé en ce que** le premier élément de corps de séparation (31), en contact avec le segment de logement (8), est mis en contrainte par le segment de logement conique (8) contre le second élément de corps de séparation (32) situé sur le côté du siège (36).

3. Support selon la revendication 2, **caractérisé en ce que** l'on prévoit un revêtement élastique et étanche dans la zone de contact du premier élément de corps de séparation (31) sur le segment de logement (8).

4. Support selon la revendication 3, **caractérisé en ce que** l'élément résiliant (6) est en caoutchouc et le revêtement élastique et étanche est exécuté d'une seule pièce avec l'élément résiliant (6).

5. Support selon l'une des revendications 1 à 4, **caractérisé en ce que** le second élément de corps de séparation (32) est fixé par conjugaison de forme sur le siège (36) par un segment de liaison du second élément d'ancrage (3).

6. Support selon l'une des revendications 1 à 5, **caractérisé en ce que** la cloison (12) est encastrée entre les deux éléments de corps de séparation (31, 32).

7. Support selon la revendication 6, **caractérisé en ce qu'**un disque perforé supportant la cloison (12) est situé au moins sur un côté de la cloison (12) exécutée de manière élastique.

8. Support selon la revendication 6 ou 7, **caractérisé en ce que** la cloison (12) est située dans un évidement du corps de séparation (13) et est maintenue au moyen de segments de maintien du corps de séparation saillant dans l'évidement.

9. Support selon l'une des revendications 1 à 8, **caractérisé en ce que** le canal s'étend de manière essentiellement concentrique au segment de logement (8) dans la direction radiale.

10. Support selon l'une des revendications 1 à 8, **caractérisé en ce que** l'espace de compensation (11) est limité par un élément déformable exécuté notamment en tant que soufflet élastique (15) qui est encastré entre le siège (36) et le corps de séparation (13).

11. Support selon l'une des revendications 1 à 10, **caractérisé en ce que** le segment extérieur dans le sens radial (18) de la paroi de canal, une zone extérieure du corps de séparation (13) et une zone extérieure du soufflet (15) sont situés les uns à côté des autres dans la direction axiale du support.
